# FASCICULE DE BREVET EUROPEEN

(11) **EP 3 314 540 B1**
(45) Date de publication et mention de la délivrance du brevet: **12.05.2021**
(21) Numéro de dépôt: 16747540.9
(22) Date de dépôt: 24.06.2016
(51) Int. Cl.: G06K 19/077

(54) **MODULE ÉLECTRONIQUE MULTICOUCHE, NOTAMMENT POUR CARTE À PUCE SANS CONTACT**
MEHRSCHICHTIGES ELEKTRONISCHES MODUL, INSBESONDERE FÜR EINE KONTAKTLOSE CHIPKARTE
MULTILAYER ELECTRONIC MODULE, IN PARTICULAR FOR A CONTACTLESS CHIP CARD

(30) Priorité: 24.06.2015 FR 1501315
(43) Date de publication de la demande: 02.05.2018
(73) Titulaire: Smart Packaging Solutions (SPS), 13790 Rousset (FR)
(72) Inventeur: CALVAS, Bernard, 13790 Rousset (FR); MEAR, Benjamin, 13790 Rousset (FR); TEBOUL, Deborah, 13790 Rousset (FR)
(74) Mandataire: Nicolle, Olivier
(86) Numéro de dépôt international: PCT/FR2016/000107
(87) Numéro de publication internationale: WO 2017/025665

(56) Documents cités:
- US-A1- 2012 326 931

## Description

L'invention concerne un module électronique pour objets portables communicants, notamment pour cartes à puce aptes à communiquer par voie radiofréquence avec un lecteur distant, ou pour passeports électroniques, ou pour d'autres objets portables communicants.

L'invention sera décrite, uniquement à titre de simplification et sans en limiter la portée, dans le contexte d'une application aux cartes à puce sans contact, étant entendu que l'invention s'applique à d'autres objets portables communicants et à d'autres facteurs de forme.

### Etat de la technique

On connaît dans le domaine des cartes à puce, des modules électroniques sans antenne. Afin de doter la carte à puce qui reçoit le module électronique d'une fonction de communication par voie RF, ces modules sont pourvus d'une puce microélectronique connectée à une antenne de type dit « ID1 », externe au module et située dans le corps de la carte à puce. Cette architecture possède des inconvénients qui sont notamment liés à la fragilité de la connexion entre le module électronique et l'antenne ID1.

Pour remédier à cela, on a d'abord conçu des modules électroniques pourvus d'une antenne miniaturisée située directement sur le module, cette antenne étant couplée électro magnétiquement avec un « booster » constitué d'une antenne concentrateur en série ou en parallèle avec l'antenne ID1 et situé sur le corps de carte. Cette architecture utilisant un couplage inductif entre le booster et l'antenne du module résout le problème mentionné ci-dessus de la connexion mécanique et électrique entre le module et le corps de carte. Mais cette architecture nécessite un total de 3 antennes sur la carte à puce, dont une antenne de grande taille, au format ID1, et le procédé de fabrication et d'intégration de l'insert portant cette antenne reste relativement complexe et coûteux.

On connait également de par le document US 2012/0326931 A1 un dispositif de communication RFID sans contact pourvu d'un module sans contact flexible et pourvu d'une antenne multicouche, et d'une antenne de plus grande taille couplée avec l'antenne du module mais située sur le corps du dispositif RFID, c'est-à-dire à l'extérieur du module. Cette architecture est similaire à celle des cartes à puce à antenne booster évoquées plus haut, et comportent les mêmes inconvénients.

Or, de plus en plus, un besoin apparaît pour intégrer tout l'étage radiofréquence d'une carte à puce ou autre produit portable communicant, dans le module électronique lui-même, afin d'éviter d'avoir une partie du circuit radiofréquence, notamment une grande antenne ID1 ou une antenne ID1 connectée à un concentrateur, dans le corps de carte. En effet, en intégrant l'étage radiofréquence dans le module électronique, on pourrait fabriquer des cartes à puce sans contact, ou des cartes duales, ou des passeports électroniques, à l'aide du procédé très économique et très maîtrisé consistant à simplement reporter dans le produit (carte, passeport, etc.) un module électronique radiofréquence indépendant, comme cela est fait pour les cartes à puce à contact au format ISO 7816-2. Autrement dit, on vise un corps de carte sans électronique et sans antenne, et un module électronique incorporant l'ensemble des composants électroniques et radiofréquence (RF) nécessaires à la communication avec un lecteur RF externe. Ceci nécessite une miniaturisation plus poussée et un changement de structure du module.

### Buts de l'invention

L'invention a par conséquent comme but principal de proposer un nouveau type de module électronique, de taille et d'épaisseur standard, mais apte à résoudre les problèmes et inconvénients précités.

Un autre but de l'invention est d'augmenter la fiabilité et de diminuer le coût de fabrication du produit final incorporant le module selon l'invention.

Un autre but de l'invention est encore d'assurer une grande flexibilité fonctionnelle du produit final, simplement à l'aide de variantes du nouveau module électronique selon l'invention.

### Principe de la solution

Dans son principe de base, l'invention prévoit de superposer deux antennes sur le même module électronique, chacune étant réalisée sur son propre substrat. Le substrat inférieur porte également la puce. Le substrat supérieur comporte un évidement permettant de laisser passer la puce dans sa hauteur, de sorte qu'il soit situé à une hauteur sensiblement égale à celle de la face supérieure de la puce, pour faciliter le câblage de cette dernière.

Le module selon l'invention aura donc une épaisseur similaire à celle d'un module standard. La somme des épaisseurs des substrats supérieur et inférieur est inférieure à l'épaisseur du module selon l'invention.

Des connexions ohmiques, capacitives ou inductives sont réalisées entre les antennes des 2 substrats pour obtenir une pluralité de schémas électriques équivalents de circuits résonants, en fonction des applications visées.

L'invention a donc pour objet un module électronique pour carte à puce à fonctionnement sans contact, comportant un premier substrat (S2) sur lequel est fixée une puce microélectronique et une première antenne (L3) connectée à ladite puce et formée par une pluralité de spires entourant ladite puce microélectronique, le module électronique comportant un second substrat (S1) superposé au premier substrat (S2) et pourvu d'un évidement disposé de telle manière que ladite puce microélectronique soit positionnée dans ledit évidement, caractérisé en ce que ledit second substrat (S1) du module électronique comporte une seconde antenne (L2) et une troisième antenne (L1) connectées en série et dont les spires sont réparties de part et d'autre dudit second substrat (S1), et au moins certaines des spires des seconde et troisième antennes (L2, L1) du module électronique situées de part et d'autre du second substrat (S1) étant disposées en regard les unes des autres de façon à créer une capacité entre leurs deux plans de spires.

Ainsi, grâce à la superposition de deux substrats chacun pourvu d'antennes, et pouvant former entre eux des capacités, il est possible, sans modifier ni la géométrie du module électronique ni la technologie de réalisation des antennes, d'obtenir une multitude de schémas électriques avec une gamme d'impédances plus étendue, et par conséquent un plus grand choix de fréquences de résonance en fonction des applications visées.

Selon un mode de réalisation, la première antenne (L3) est électriquement isolée par rapport aux seconde et troisième antennes (L2, L1) par interposition d'un film isolant.

Alternativement, les seconde et troisième antennes (L2, L1) peuvent être électriquement connectées avec la première antenne (L3), par l'intermédiaire d'une colle conductrice.

Selon un mode de réalisation, une feuille isolante est interposée entre les premier et second substrats (S2, S1) et la troisième antenne (L1) est électriquement connectée avec la première antenne (L3) par l'intermédiaire d'un fil de connexion.

Selon une variante préférée du module électronique selon l'invention, l'épaisseur cumulée des deux substrats est inférieure à l'épaisseur du module, mais il est possible que la face supérieure du second substrat arrive sensiblement au même niveau que la face supérieure de la puce.

L'invention a également pour objet une carte à puce comportant un module électronique tel que défini ci-dessus.

### Description détaillée

L'invention sera mieux comprise à la lumière de la description détaillée et des dessins, dans lesquels :
- la figure 1 représente un schéma de principe d'une carte à puce selon l'état de la technique, comportant un module avec antenne, et une antenne de corps de carte avec booster pour communiquer avec un lecteur radiofréquence ;
- la figure 2 représente une vue en plan du module électronique de la carte à puce de la figure 1 ;
- la figure 3 représente une vue en coupe transversale du module électronique de la figure 2 ;
- la figure 4 représente une vue en coupe transversale du module électronique selon l'invention ;
- la figure 5 représente une vue de dessus du module électronique de la figure 4 ;
- la figure 6 représente le schéma électrique équivalent du module électronique des figures 4 et 5 ;
- les figures 7A et 7B représentent respectivement une vue en coupe d'une première variante du module électronique selon l'invention, et le schéma électrique équivalent correspondant ;
- les figures 8A et 8B représentent respectivement une vue en coupe d'une seconde variante du module électronique selon l'invention, et le schéma électrique équivalent correspondant ;
- les figures 9A et 9B représentent respectivement une vue en coupe d'une troisième variante du module électronique selon l'invention, et le schéma électrique équivalent correspondant ;
- les figures 10A et 10B représentent respectivement une vue en coupe d'une quatrième variante du module électronique selon l'invention, et le schéma électrique équivalent correspondant ;
- les figures 11A et 11B représentent respectivement une vue en coupe d'une cinquième variante de réalisation du module électronique selon l'invention, et son schéma électrique équivalent correspondant ;

### Description détaillée des figures

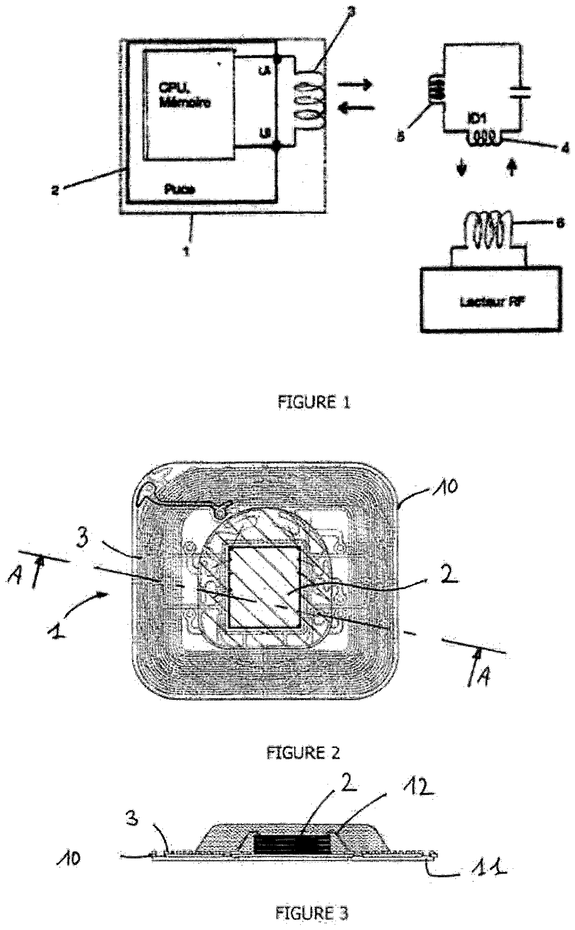

On se réfère à la figure 1 correspondant au système selon l'état de la technique. On a représenté dans cette figure le schéma typique d'un module microélectronique 1 pour carte à puce, comportant une puce 2 pourvue de façon classique d'un processeur, d'une mémoire, et d'un étage de communication radiofréquence, non représentés en détail. Les bornes de sortie principales Lₐ, L_{b} de l'étage de communication de la puce 2 sont connectées à une antenne 3 miniaturisée réalisée sur le module 1.

La carte à puce comporte en plus du module, un système d'antennes, encore appelées « booster », intégrées au corps de la carte à puce, et composé d'une antenne 4 au format ID1 connectée en série avec une antenne concentrateur 5. L'antenne 4 permet de récupérer le flux électromagnétique de l'antenne 6 du lecteur externe, et l'antenne concentrateur 5 permet de concentrer le flux électromagnétique de couplage entre le corps de carte et le module.

L'antenne 6 du lecteur génère un champ électromagnétique. Le booster au travers de la grande antenne 4 dite ID1 du corps de carte utilise ce champ comme source d'alimentation pour activer et alimenter électriquement le composant microélectronique 1 du module.

L'énergie et les données récupérées par l'antenne ID1 du booster sont transmises à l'antenne 3 du module via le concentrateur 5. La puce 2 comporte deux plots de connexion principaux Lₐ, L_{b} servant à la communication radiofréquence de la puce et reliés à la capacité intrinsèque de la puce (non représentée), et à l'antenne 3 du module 1.

Les figures 2 et 3 représentent un exemple de module électronique 1 connu, en vue en plan et en vue en coupe. Comme on le voit, le module 1 comporte une antenne 3 unique formée de spires conductrices réalisées sur le substrat 10. L'autre face du substrat porte des contacts métalliques 11 qui servent de contacts ohmiques avec les contacts équivalents d'un lecteur de carte à puce. De façon connue, les plots de sortie de l'interface radiofréquence de la puce 2 sont connectés à des plots de connexion de l'antenne 3 au moyen de fils métalliques 12.

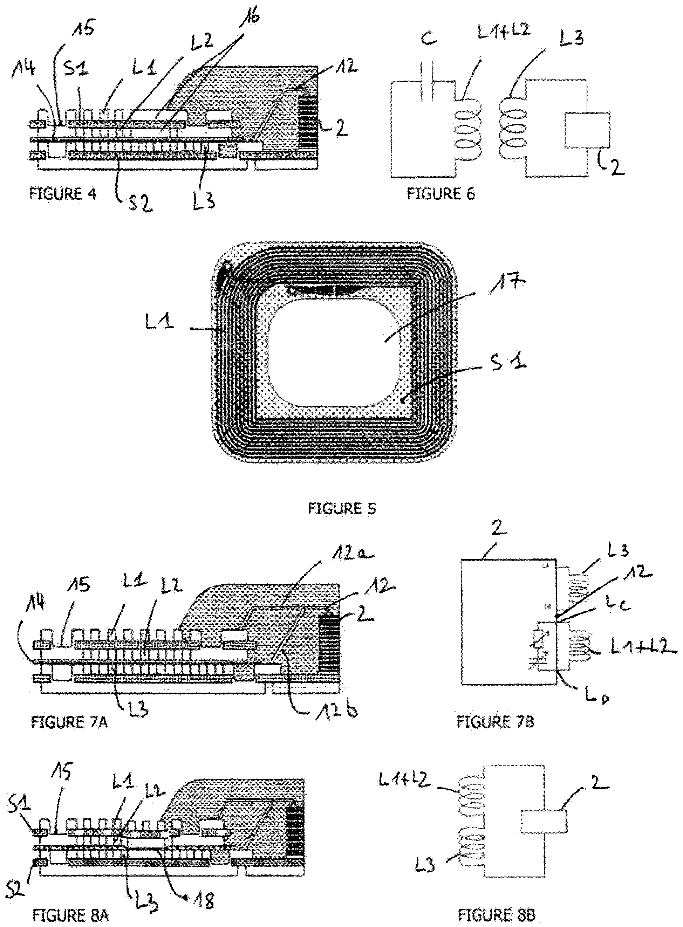

En figure 4 on a représenté une coupe partielle d'un module électronique 1 selon l'invention. Comme on le voit, ce module comporte un double substrat S1 (substrat supérieur), S2 (substrat inférieur), sous la forme de deux substrats S1, S2 superposés. Sur la face supérieure du substrat supérieur S1 sont réalisées les spires d'une première antenne d'inductance L1, désignée par la référence L1 pour simplifier. Sur la face inférieure du substrat supérieur S1 sont réalisées les spires d'une seconde antenne d'inductance L2, notée L2. Sur le substrat inférieur S2 sont réalisées les spires d'une troisième antenne d'inductance L3, désignée par L3. Dans l'exemple représenté, les spires de la seconde antenne L2 sont réalisées en face des spires de la 3ème antenne L3. Afin d'isoler électriquement les spires de l'antenne L2 et les spires de l'antenne L3, on a interposé entre elles un isolant électrique 14. Les spires des antennes L1, L2 du substrat supérieur S1 sont mises en série par l'intermédiaire d'un via conducteur 15.

Par ailleurs, des placards métalliques 16 situés en regard de part et d'autre du substrat supérieur S1, forment un condensateur de capacité C.

Ainsi, comme représenté sur le schéma électrique équivalent de la figure 6, on obtient un module électronique comportant une puce microélectronique connectée en série avec une antenne L3, couplée électro magnétiquement avec deux antennes L1, L2 en série et de valeur L1 + L2, en série avec un condensateur de capacité C.

Ainsi, par le choix adéquat des valeurs des inductances L1, L2, L3 et C, on obtient un circuit résonant multicouches offrant davantage de modes de fonctionnement que les modules électroniques pour cartes à puce connues.

En particulier, la superposition des deux substrats S1, S2 permet d'obtenir, sans changer la technologie de réalisation des antennes, une inductance L1 + L2 bien supérieure à l'inductance L1 des modules connus à simple substrat.

Comme représenté sur la figure 5 qui montre le substrat supérieur S1 du nouveau module électronique en vue de dessus, ce substrat S1 comporte un évidement ou ouverture traversante 17, de taille suffisante pour laisser passer la partie supérieure de la puce 2 et tout ou partie des fils de connexion 12.

Les figures 7 à 11 représentent des variantes de réalisation du principe mis en œuvre en figure 4.

La figure 7A diffère de la figure 4, en ce que les antennes L1, L2 sont connectées en série par le biais du via 15, et connectées à une capacité disponible sur la puce grâce au fil de connexion 12a entre Lc et LD, et couplées à une antenne L3, connectée elle-même à la puce via le fil de connexion 12b entre LA et LB, selon le schéma équivalent de la figure 7B.

La figure 8A diffère de la figure 7A par le mode d'interconnexion des antennes L1, L2 et L3. En effet, alors que les antennes L1 et L2 sont connectées en série grâce à un via 15, elles sont encore connectées en série avec l'antenne L3 grâce à une connexion 18 qui est formée par un écrasement local d'une colle anisotropique qui rend cet écrasement conducteur. La feuille isolante 14 des figures 4 et 7A est donc remplacée par une colle conductrice anisotropique.

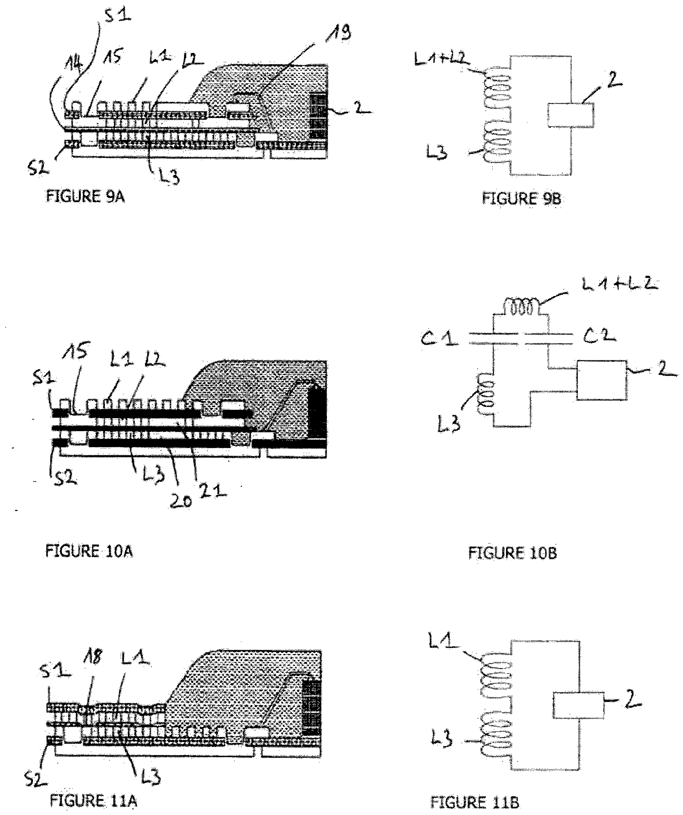

Au contraire, comme représenté en figure 9A, il est possible d'arriver au même schéma équivalent (figure 9B identique à la figure 8B) en conservant une feuille isolante 14 entre les substrats inférieur et supérieur, mais en connectant directement l'antenne L1 (en série avec l'antenne L2 grâce au via 15) avec l'antenne L3 grâce au fil de connexion 19.

Dans un autre mode de réalisation représenté en figure 10A, les antennes L1 et L2 connectées en série par le via 15, sont connectées à l'antenne L3 et à la puce 2 par couplage capacitif par l'intermédiaire de plaques métalliques 20 et 21disposées en regard l'une de l'autre sous le substrat supérieur et sur le substrat inférieur. On obtient ainsi le schéma d'un circuit résonant conforme à la figure 10B.

Dans la variante de la figure 11A, les substrats supérieur S1 et inférieur S2 comportent des antennes L1, L3 agencées tête bêche, et séparées par un matériau anisotropique qui permet de les interconnecter électriquement à l'endroit d'un pincement ou écrasement local 18. On obtient ainsi un module dont le substrat supérieur S1 est simple face suivant le schéma électrique de la figure 11B, identique à celui des figures 7B, 9B, mais par un autre moyen.

En définitive, grâce à la superposition de deux substrats chacun pourvu d'antennes, et pouvant former entre eux des capacités, il est possible, sans modifier ni la géométrie du module électronique ni la technologie de réalisation des antennes, une multitude de schémas électriques avec une gamme d'impédances plus étendue, et par conséquent un plus grand choix de fréquences de résonance en fonction des applications visées.

### Avantages de l'invention

Le module électronique selon l'invention atteint les buts fixés. Il permet de garder une épaisseur standard pour la gamme de produits visés, par exemple l'épaisseur standard d'un module pour carte à puce, tout en augmentant le nombre et la valeur des inductances à bord du module, ce qui permet d'enrichir les fonctionnalités du module et des produits, notamment cartes à puce, qu'il va équiper.

En outre, le module électronique selon l'invention présente un coût moindre, et un procédé de fabrication et d'intégration simplifié.

## Revendications

1. Module électronique (1) pour carte à puce à fonctionnement sans contact, comportant un premier substrat (S2) sur lequel est fixée une puce microélectronique (2) et une première antenne (L3) connectée à ladite puce et formée par une pluralité de spires entourant ladite puce microélectronique (2), le module électronique (1) comportant un second substrat (S1) superposé au premier substrat (S2) et pourvu d'un évidement (17) disposé de telle manière que ladite puce microélectronique (2) soit positionnée dans ledit évidement (17), **caractérisé en ce que** ledit second substrat (S1) du module électronique (1) comporte une seconde antenne (L2) et une troisième antenne (L1) connectées en série et dont les spires sont réparties de part et d'autre dudit second substrat (S1), et **en ce qu'**au moins certaines des spires des seconde et troisième antennes (L2, L1) du module électronique (1) situées de part et d'autre du second substrat (S1) sont disposées en regard les unes des autres de façon à créer une capacité entre leurs deux plans de spires.

2. Module électronique (1) selon l'une quelconque des revendications précédentes, **caractérisé en ce que** la première antenne (L3) est électriquement isolée par rapport aux seconde et troisième antennes (L2, L1) par interposition d'un film isolant (14).

3. Module électronique (1) selon l'une quelconque des revendications 1 à 2, **caractérisé en ce que** les seconde et troisième antennes (L2, L1) sont électriquement connectées avec la première antenne (L3), par l'intermédiaire d'une colle conductrice (18).

4. Module électronique (1) selon l'une quelconque des revendications 1 ou 2, **caractérisé en ce qu'**une feuille isolante (14) est interposée entre les premier et second substrats (S2, S1) et **en ce que** que la troisième antenne (L1) est électriquement connectée avec la première antenne (L3), par l'intermédiaire d'un fil de connexion (19).

5. Module électronique (1) selon l'une quelconque des revendications précédentes, **caractérisé en ce que** l'épaisseur cumulée des deux substrats (S1, S2) est inférieure à l'épaisseur du module électronique (1).

6. Module électronique (1) selon l'une quelconque des revendications précédentes, **caractérisé en ce que** la face supérieure du second substrat (S1) est sensiblement au même niveau que la face supérieure de la puce (2).

7. Carte à puce, **caractérisée en ce qu'**elle comporte un module électronique (1) selon l'une quelconque des revendications 1 à 6.

## Patentansprüche

1. Elektronisches Modul (1) für eine Chipkarte mit kontaktlosem Betrieb, aufweisend ein erstes Substrat (S2), auf dem ein mikroelektronischer Chip (2) und eine erste Antenne (L3) befestigt ist, die mit dem Chip verbunden und von einer Mehrzahl von Windungen, die den mikroelektronischen Chip (2) umgeben, gebildet ist, wobei das elektronische Modul (1) ein zweites Substrat (S1) aufweist, das das erste Substrat (S2) überlagert und mit einer Ausnehmung (17) versehen ist, die so angeordnet ist, dass der mikroelektronische Chip (2) in der Ausnehmung (17) positioniert ist, **dadurch gekennzeichnet, dass** das zweite Substrat (S1) des elektronischen Moduls (1) eine zweite Antenne (L2) und eine dritte Antenne (L1) aufweist, die in Reihe geschaltet sind und deren Windungen beiderseits des zweiten Substrats (S1) verteilt sind, und dadurch, dass wenigstens einige der Windungen der zweiten und dritten Antenne (L2, L1) des elektronischen Moduls (1), die sich beiderseits des zweiten Substrats (S1) befinden, die einander gegenüber so angeordnet sind, dass eine Kapazität zwischen ihren zwei Windungsebenen erzeugt wird.

2. Elektronisches Modul (1) nach Anspruch 1, **dadurch gekennzeichnet, dass** die erste Antenne (L3) von der zweiten und dritten Antenne (L2, L1) durch Zwischenfügung eines Isolierfilms (14) elektrisch isoliert ist.

3. Elektronisches Modul (1) nach einem der Ansprüche 1 bis 2, **dadurch gekennzeichnet, dass** die zweite und dritte Antenne (L2, L1) mittels eines leitenden Klebstoffs (18) mit der ersten Antenne (L3) elektrisch verbunden sind.

4. Elektronisches Modul (1) nach einem der Ansprüche 1 oder 2, **dadurch gekennzeichnet, dass** ein Isolierblatt (14) zwischen dem ersten und zweiten Substrat (S2, S1) eingefügt ist, und dadurch, dass die dritte Antenne (L1) mittels eines Verbindungsdrahts (19) mit der ersten Antenne (L3) elektrisch verbunden ist.

5. Elektronisches Modul (1) nach einem der vorhergehenden Ansprüche, **dadurch gekennzeichnet, dass** die kumulierte Dicke der zwei Substrate (S1, S2) geringer als die Dicke des elektronischen Moduls (1) ist.

6. Elektronisches Modul (1) nach einem der vorhergehenden Ansprüche, **dadurch gekennzeichnet, dass** sich die Oberseite des zweiten Substrats (S1) im Wesentlichen auf derselben Ebene wie die Oberseite des Chips (2) befindet.

7. Chipkarte, **dadurch gekennzeichnet, dass** sie ein elektronisches Modul (1) nach einem der Ansprüche 1 bis 6 aufweist.

## Claims

1. Electronic module (1) for a chip card with contactless operation, comprising a first substrate (S2) to which there is attached a microelectronic chip (2) and a first antenna (L3) connected to said chip and formed by a plurality of turns surrounding said microelectronic chip (2), the electronic module (1) comprising a second substrate (S1) stacked on the first substrate (S2) and provided with a recess (17) arranged such that said microelectronic chip (2) is positioned in said recess (17), **characterized in that** said second substrate (S1) of the electronic module (1) comprises a second antenna (L2) and a third antenna (L1) that are connected in series and the turns of which are distributed on either side of said second substrate (S1), and **in that** at least some of the turns of the second and third antennas (L2, L1) of the electronic module (1) that are situated on either side of the second substrate (S1) are arranged facing one another so as to create a capacitance between their two planes of turns.

2. Electronic module (1) according to Claim 1, **characterized in that** the first antenna (L3) is electrically insulated from the second and third antennas (L2, L1) through the interposition of an insulating film (14) .

3. Electronic module (1) according to either one of Claims 1 and 2, **characterized in that** the second and third antennas (L2, L1) are electrically connected to the first antenna (L3) by way of a conductive adhesive (18).

4. Electronic module (1) according to either one of Claims 1 and 2, **characterized in that** an insulating sheet (14) is interposed between the first and second substrates (S2, S1) and **in that** the third antenna (L1) is electrically connected to the first antenna (L3) by way of a connecting wire (19).

5. Electronic module (1) according to any one of the preceding claims, **characterized in that** the total thickness of the two substrates (S1, S2) is less than the thickness of the electronic module (1).

6. Electronic module (1) according to any one of the preceding claims, **characterized in that** the upper face of the second substrate (S1) is substantially level with the upper face of the chip (2).

7. Chip card, **characterized in that** it comprises an electronic module (1) according to any one of Claims 1 to 6.
